(19) Europäisches Patentamt
European Patent Office
Office européen des brevets

(11) **EP 2 596 579 B1**

(12) **EUROPÄISCHE PATENTSCHRIFT**

(45) Veröffentlichungstag und Bekanntmachung des Hinweises auf die Patenterteilung:
**03.12.2014 Patentblatt 2014/49**

(21) Anmeldenummer: **11739025.2**

(22) Anmeldetag: **18.07.2011**

(51) Int Cl.:
*H02P 6/18* (2006.01)          *H02P 21/14* (2006.01)
*G01B 7/30* (2006.01)

(86) Internationale Anmeldenummer:
**PCT/EP2011/062190**

(87) Internationale Veröffentlichungsnummer:
**WO 2012/010532 (26.01.2012 Gazette 2012/04)**

(54) **VERFAHREN UND VORRICHTUNG ZUR SENSORLOSEN LAGEERKENNUNG EINER ELEKTRONISCH KOMMUTIERTEN ELEKTRISCHEN MASCHINE**

METHOD AND DEVICE FOR THE SENSORLESS POSITION DETERMINATION OF AN ELECTRONICALLY COMMUTATED ELECTRIC MACHINE

PROCÉDÉ ET DISPOSITIF POUR RECONNAÎTRE, SANS CAPTEUR, LA POSITION D'UNE MACHINE ÉLECTRIQUE À COMMUTATION ÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.07.2010 DE 102010038295**

(43) Veröffentlichungstag der Anmeldung:
**29.05.2013 Patentblatt 2013/22**

(73) Patentinhaber: **Robert Bosch GmbH**
**70442 Stuttgart (DE)**

(72) Erfinder:
• **FRICKER, David**
 **F-67240 Oberhoffen sur Moder (FR)**
• **REISS, Alexander**
 **F-67160 Salmbach (FR)**

(56) Entgegenhaltungen:
**EP-A1- 1 612 927     EP-A2- 1 133 050
JP-A- 2009 261 103     US-A1- 2009 315 492**

**Beschreibung**

Technisches Gebiet

Die vorliegende Erfindung betrifft elektronisch kommutierte elektrische Maschinen, insbesondere Verfahren zur sensorlosen Lagedetektion eines Läufers einer elektrischen Maschine.

Stand der Technik

Zur elektronischen Kommutierung von bürstenlosen elektrischen Maschinen ist eine Information über die momentane Läuferlage notwendig. Mithilfe der Läuferlage wird eine elektronische Kommutierung durchgeführt, indem abhängig von der Läuferlage Phasenspannungen an die elektrische Maschine angelegt bzw. im Falle eines Betriebs als Generator an dieser abgegriffen werden.

Es sind verschiedene Verfahren zum Ermitteln der Läuferlage bekannt. Bei einer Gruppe von elektrischen Maschinen wird die Läuferlage durch einen integrierten oder separaten Lagesensor erfasst und der Steuereinheit, die die elektronische Kommutierung vornimmt, zur Verfügung gestellt. Bei einer anderen Gruppe von elektrischen Maschinen wird die Läuferlage sensorlos aus den Motorspannungen und/oder Motorströmen ermittelt.

Ein bekanntes Verfahren zur sensorlosen Lageerfassung ist das so genannte Back-EMF-Verfahren, bei dem aus einem Verlauf der induzierten Spannung in einem Phasenstrang der elektrischen Maschine eine Läuferlage abgeleitet wird. Da es zur Messung der induzierten Spannung notwendig ist, die entsprechenden Phasenanschlüsse stromlos zu schalten, ist man für die Verwendung des Back-EMF-Verfahrens in der Wahl des geeigneten Bestromungsmusters für die elektronische Kommutierung eingeschränkt.

Weiterhin ist eine Läuferlagebestimmung mithilfe des Back-EMF-Verfahrens in der Regel bei solchen elektrischen Maschinen exakt möglich, bei denen die induzierte Spannung einen sinusförmigen Verlauf beschreibt und die Phasenspannungen nicht über einen Wechselrichter gestellt werden, da dort ein Phasenanschluss nicht stromlos geschaltet werden kann. Eine für zum Beispiel das Geräuschverhalten vorteilhafte dauerhafte Spannungsvorgabe (ohne Austastlücke) ist mit einem Back-EMF Verfahren nicht möglich. Die Güte von bekannten Verfahren zum sensorlosem Betrieb von sinusförmigen Maschinen wie zum Beispiel bei einer sensorlosen feldorientierten Regelung nimmt ab, je mehr der Verlauf der induzierten Spannung von einem sinusförmigen Verlauf abweicht.

Die Druckschrift EP 1 612 927 A1 offenbart ein Verfahren zum Bestimmen einer Läuferlage einer elektrischen Maschine basierend auf Phasenspannungen und Phasenströmen. Es werden dabei induzierte Spannungen basierend auf Phasenspannungen und Phasenströmen bestimmt und diese bezüglich eines rotorfesten Koordinatensystems bereitgestellt. Aus den induzierten Spannungen wird eine Rotordrehzahl ermittelt und die Läuferlage durch zeitliche Integration der Rotordrehzahl berechnet.

Die Druckschrift EP 1 133 050 A2 beschreibt ein Verfahren zur Ermittlung der Rotorlage einer Synchronmaschine basierend auf Phasenspannungen und Phasenströmen. Es werden dabei induzierte Spannungen basierend auf Phasenspannungen und Phasenströmen bestimmt und diese bezüglich eines rotorfesten Koordinatensystems bereitgestellt. Aus dem Phasenwinkel der resultierenden induzierten Spannung wird die Rotorlage ermittelt.

Es ist daher Aufgabe der vorliegenden Erfindung, ein verbessertes Vefahren zur sensorlosen Erfassung der Läuferlage zur Verfügung zu stellen, das auch eingesetzt werden kann, wenn die induzierten Spannungen nicht sinusförmig sind und das unabhängig von der Kummutierungsart verwendet werden kann.

Offenbarung der Erfindung

Diese Aufgabe wird durch das Verfahren zur Bestimmung einer Läuferlage einer elektrischen Maschine gemäß Anspruch 1 sowie durch die Vorrichtung und das Motorsystem gemäß den nebengeordneten Ansprüchen gelöst.

Weitere vorteilhafte Ausgestaltungen sind in den unabhängigen Ansprüchen angegeben.

Gemäß einem ersten Aspekt ist ein Verfahren zum Ermitteln einer Läuferlage einer rotatorischen, mehrphasigen, elektronisch kommutierten elektrischen Maschine vorgesehen. Die elektrische Maschine weist mehrere Phasenwicklungen auf, die über Phasenanschlüsse bestrombar sind. Das Verfahren umfasst die folgenden Schritte:

-   Bestimmen von Phasenspannungen und Phasenströmen an Phasenanschlüssen der elektrischen Maschine;
-   Ermitteln der induzierten Spannungen an den Phasenanschlüssen der elektrischen Maschine aus den bestimmten Phasenspannungen und Phasenströmen;
-   Bereitstellen des durch die induzierten Spannungen bestimmten Spannungszeiger der induzierten Spannung bezüglich eines statorfesten kartesischen Koordinatensystems; und
-   Bestimmen der Läuferlage als einen Raumzeigerwinkel des bezüglich des statorfesten kartesischen Koordinatensystem bereitgestellten Spannungszeigers der induzierten Spannung.

Eine Idee des obigen Verfahrens besteht darin, bei einer mehrphasigen elektrischen Maschine die induzierte Spannung in den Phasenwicklungen zu ermitteln und als ein Spannungszeiger eines statorfesten Koordinatensystems bereitzustellen, so dass der Raumzeigerwinkel der induzierten Spannung eine Angabe über die Läuferlage darstellt oder dieser direkt zugeordnet werden kann. Dies ermöglicht eine besonders einfache Ableitung der Läuferlage aus der induzierten Spannung.

Insbesondere kann das Bereitstellen des durch die induzierten Spannungen bestimmten Spannungszeigers der induzierten Spannung bezüglich des statorfesten kartesischen Koordinatensystems durchgeführt werden, indem die ermittelten induzierten Spannungen in das statorfeste kartesische Koordinatensystems umgewandelt werden, oder indem die bestimmten Phasenspannungen und Phasenströme an den Phasenanschlüssen der elektrischen Maschine in das statorfeste kartesische Koordinatensystems umgewandelt werden, bevor aus diesen die induzierten Spannungen ermittelt werden.

Weiterhin wird der umgewandelte Spannungszeiger der induzierten Spannung mit einem Korrekturwinkel beaufschlagt, wobei der Korrekturwinkel von dem Spannungszeigerwinkel abhängt. Um auch bei nicht sinusförmigen induzierten Spannungen die Läuferlage aus der induzierten Spannung zu ermitteln, wird mithilfe des Korrekturwinkels der Fehler einer nicht sinusförmigen induzierten Spannung bei der Läuferlageermittelung korrigiert.

Der Korrekturwinkel wird mithilfe des Spannungszeigerwinkels und mithilfe der Drehzahl des Läufers bestimmt.

Der Korrekturwinkel kann mithilfe einer Lookup-Tabelle durch Vorgabe des Spannungszeigerwinkels und/oder der Drehzahl bestimmt werden.

Gemäß einer weiteren Ausführungsform kann das Bestimmen der Phasenspannungen und Phasenströme an den Phasenanschlüssen der elektrischen Maschine durchgeführt werden, indem die Phasenspannungen und Phasenströme gemessen werden oder indem die Phasenspannungen aus einer bereitgestellten Zwischenkreisspannung und einem Tastverhältnis einer Pulsweitenmodulation, mit dem die Phasenanschlüsse angesteuert werden, ermittelt werden.

Gemäß einem weiteren Aspekt ist eine Vorrichtung zum Ermitteln einer Läuferlage einer rotatorischen, mehrphasigen, elektronisch kommutierten elektrischen Maschine vorgesehen. Die elektrische Maschine weist mehrere Phasenwicklungen auf, die über Phasenanschlüsse bestrombar sind. Die Vorrichtung umfasst

- eine Einrichtung zum Bestimmen von Phasenspannungen und Phasenströmen an Phasenanschlüssen der elektrischen Maschine;
- eine Steuereinheit, die ausgebildet ist, um

  • die induzierten Spannungen an den Phasenanschlüssen der elektrischen Maschine zu ermitteln;
  • um den durch die induzierten Spannungen bestimmten Spannungszeiger der induzierten Spannung bezüglich eines statorfesten kartesischen Koordinatensystems bereitzustellen; und
  • um die Läuferlage als einen Spannungszeigerwinkel des bezüglich des statorfesten kartesischen Koordinatensystem bereitgestellten Spannungszeigers der induzierten Spannung zu bestimmen.

Gemäß einem weiteren Aspekt ist ein Motorsystem mit einer rotatorischen, mehrphasigen, elektronisch kommutierten elektrischen Maschine und mit der obigen Vorrichtung vorgesehen.

Gemäß einem weiteren Aspekt ist ein Computerprogrammprodukt vorgesehen, das einen Programmcode enthält, der, wenn er auf einer Datenverarbeitungseinheit ausgeführt wird, in dem Verfahren nach einem der Ansprüche 1 bis 4, die folgenden Schritte durchführt:

- Empfangen von Angaben zu den Phasenspannungen und Phasenströmen an Phasenanschlüssen der elektrischen Maschine;
- Ermitteln der induzierten Spannungen an den Phasenanschlüssen der elektrischen Maschine aus den empfangenen Phasenspannungen und Phasenströmen;
- Bereitstellen der durch die induzierten Spannungen bestimmten Spannungszeiger der induzierten Spannung bezüglich eines statorfesten kartesischen Koordinatensystems; und
- Bestimmen der Läuferlage als einen Spannungszeigerwinkel des bezüglich des statorfesten kartesischen Koordinatensystem bereitgestellten Spannungszeigers der induzierten Spannung.

Kurzbeschreibung der Zeichnungen

Bevorzugte Ausführungsformen der vorliegenden Erfindung werden nachfolgend anhand der beigefügten Zeichnungen näher erläutert. Es zeigen:

Figur 1a    eine schematische Darstellung einer Synchronmaschine als Beispiel für eine elektronisch kommutierte elektrische Maschine;

Figur 1b  eine Hilfsdarstellung zur Veranschaulichung einer Umwandlung des Spannungszeigers der induzierten Spannung in ein statorfestes kartesisches Koordinatensystem; und

Figur 2  ein Flußdiagramm zur Veranschaulichung des Verfahrens zum Ermitteln der Läuferlage aus der induzierten Phasenspannung.

Beschreibung von Ausführungsformen

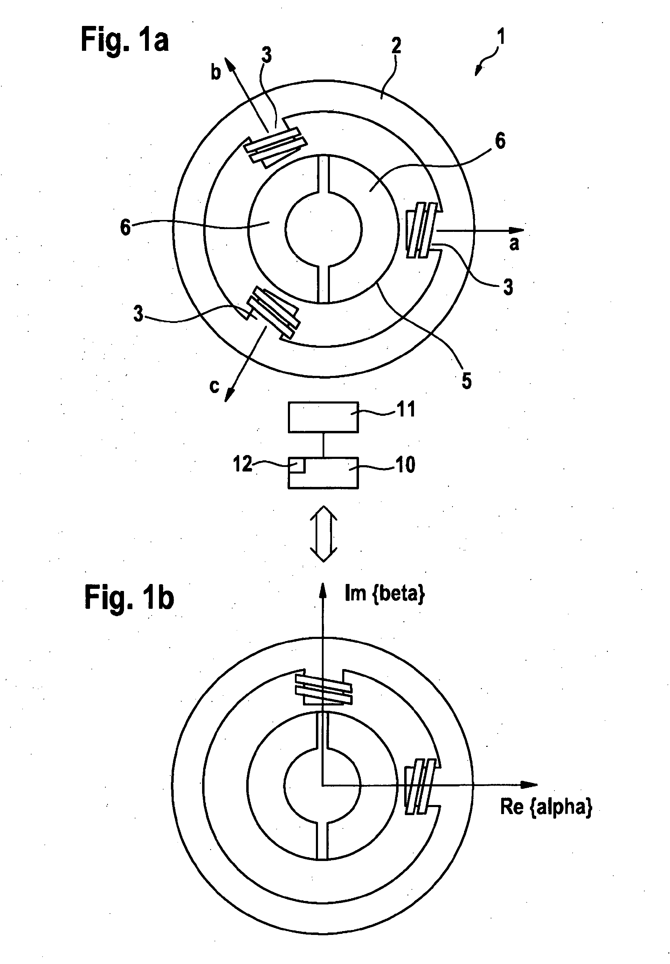

In Figur 1 ist eine vereinfachte Darstellung einer dreiphasigen elektronisch kommutierten elektrischen Maschine 1 als eine Innenläufermaschine dargestellt. Man erkennt einen Stator 2 mit drei um 120° versetzt zueinander angeordneten Statorzähnen 3. In der Praxis ist die Anzahl der Statorzähne 3 an dem Stator 2 in der Regel größer und entspricht beispielsweise einem Vielfachen von drei, wie z. B. neun, zwölf oder achtzehn.

Die Statorzähne 3 sind jeweils mit einer Phasenwicklung 4 versehen und stellen bei entsprechender Bestromung eine Komponente des Statormagnetfelds zur Verfügung. Die Statorwicklungen 4 sind in herkömmlicher Weise in Dreiecksschaltung oder in Sternschaltung miteinander verschaltet. Jede der Statorwicklungen 4 kann über einen entsprechenden Phasenanschluss (nicht gezeigt) der elektrischen Maschine 1 bestromt werden.

Im Inneren des Stators 2 ist drehbeweglich ein Rotor 5 als Läufer der elektrischen Maschine 1 angebracht, der in der vereinfachten Darstellung der Figur 1a zwei Rotorpole 6 aufweist, die einander gegenüber liegend angeordnet sind. In der Praxis können Synchronmaschinen mehr als zwei Rotorpole, beispielsweise vier oder acht Rotorpole, aufweisen.

Es ist eine Steuereinheit 10 vorgesehen, die z. B. mithilfe einer Treiberschaltung 11 die Statorwicklungen 4 ansteuert. Die Ansteuerung erfolgt mithilfe einer elektronischen Kommutierung, so dass jede der Phasenwicklungen 4 abhängig von der Lage des Rotors 5 mit einer Phasenspannung beaufschlagt wird. Durch die Steuereinheit 10 können verschiedene Kommutierungsarten vorgesehen werden, wie beispielsweise eine Blockkommutierung oder eine Trapezkommutierung und dergleichen. Zusätzlich zur elektronischen Kommutierung kann eine bestimmte Phasenspannung durch eine Pulsweitenmodulation einer anliegenden Zwischenkreisspannung bzw. Versorgungsspannung erzeugt werden.

Zum Erfassen der induzierten Spannung ist es bislang notwendig, einen Phasenanschluss der elektrischen Maschine 1 stromlos zu schalten und die dort anliegende, in der damit verbundenen Phasenwicklung induzierten Spannung zu ermitteln und auszuwerten. Dies erfolgt in der Regel in festgelegten Austastlücken, deren Zeitdauer begrenzt ist, um einen möglichst geringen Einfluss auf die Ansteuerung der elektrischen Maschine 1 auszuüben.

Alternativ kann die induzierte Spannung auch bestimmt werden, indem an den Phasenanschlüssen die Phasenspannungen $\vec{U}_S$ und die Phasenströme $\vec{I}_S$ bestimmt werden. Die Phasenspannungen $\vec{U}_S$ und die Phasenströme $\vec{I}_S$ können beispielsweise durch Messung bestimmt werden. Die Messung der Phasenspannungen $\vec{U}_S$ und der Phasenströme $\vec{I}_S$ erfolgt durch geeignete Messvorrichtungen 12, die entweder in der Treiberschaltung 11 oder in der Steuereinheit 10 vorgesehen sein können. Die Messvorrichtungen 12 können beispielsweise Messwiderstände (Shunts), Analog-Digital-Wandler und dergleichen aufweisen. Alternativ können die Phasenspannungen $\vec{U}_S$ und die Phasenströme $\vec{I}_S$ aus einer Messung oder Kenntnis einer an der Treiberschaltung 11 anliegenden Zwischenkreisspannung (Versorgungsspannung) und dem Tastverhältnis der Pulsweitenmodulation, mit dem die betreffende Phasenwicklung angesteuert wird, ermittelt werden.

Aus den Phasenspannungen $\vec{U}_S$ und den Phasenströmen $\vec{I}_S$ wird entsprechend die induzierte Spannung $\vec{U}_{ind}$ ermittelt. In Vektorschreibweise gilt:

$$\vec{U}_{ind} = \vec{U}_S - R \cdot \vec{I}_S - [L]\frac{\vec{d i}_S}{dt}$$

Als besonders vorteilhaft hat sich herausgestellt, die induzierte Spannung $\vec{U}_{ind}$ als umlaufenden Spannungs-

zeiger eines statorfesten Koordinatensystems, insbesondere eines kartesischen Koordinatensystems, darzustellen. Dies ist schematisch in Figur 1b dargestellt, wobei als Ersatzbild der Stator 2 zwei um 90° zueinander versetzte Statorwicklungen 4 aufweist. Mithilfe der beiden Ersatzstatorwicklungen 4, die um 90° zueinander versetzt am Stator 2 angeordnet sind, wird verdeutlicht, dass die Statorwicklungen 4 in einer mehrphasigen elektrischen Maschine, wie sie als Beispiel in Figur 1a dargestellt ist, immer auch in einem statorfesten Koordinatensystem dargestellt werden können, d. h. an einer elektrischen Maschine mit um 90° zueinander versetzten Statorwicklungen. Im obigen Beispiel kann aus den Angaben der induzierten Spannungen $U_{ind1}$, $U_{ind2}$, $U_{ind3}$ im dreiphasigen System die induzierte Spannung des statorfesten kartesischen Koordinatensystems in polarer Darstellung wie folgt ermittelt werden:

$$\breve{U}_{ind} = U_{ind} \cdot e^{-j\varphi} = U_{ind1} \cdot e^{-j0°} + U_{ind2} \cdot e^{-j120°} + U_{ind3} \cdot e^{-j240°}$$

Der Raumzeigerwinkel φ der nach obiger Formel ermittelten induzierten Spannung stellt dann direkt die Rotorlage des Rotors 5 dar.

Voraussetzung hierfür ist, dass die induzierte Spannung $\vec{U}_{ind}$ einen sinusförmigen Verlauf aufweist. Die induzierte Spannung $\vec{U}_{ind}$ ist in erheblichem Maße von der Konstruktion der elektrischen Maschine abhängig, insbesondere von der Formung des Luftspalts zwischen den Rotorpolen 6 und den Statorzähnen 3. Um die tatsächliche Rotorlage φ' zu ermitteln, muss daher bei einer nicht sinusförmigen induzierten Spannung eine Korrektur durchgeführt werden. Dazu kann beispielsweise ein von dem Raumzeigerwinkel abhängiger Korrekturwinkel K(φ) vorgesehen werden, mit dem der Raumzeigerwinkel der nicht sinusförmige induzierte Spannung $\vec{U}_{ind}$ beaufschlagt wird, um dieser zu der Läuferlage zu korrigieren. Die Korrektur hat zur Folge, dass auch der Raumzeigerwinkel φ der nicht sinusförmigen Spannung lageabhängig mit dem Korrekturwinkel K(φ) beaufschlagt wird.

Zusätzlich zu dem Raumzeigerwinkel φ kann die Drehzahl n der elektrischen Maschine berücksichtigt werden, da die induzierte Spannung $\vec{U}_{ind}$, insbesondere deren Verlauf, ebenfalls von der Drehzahl n abhängig ist. Das Bereitstellen des Korrekturwinkels K(φ,n) erfolgt in der Regel durch eine Lookup-Tabelle, die entweder nach der Herstellung der elektrischen Maschine 1 motorindividuell eingelernt oder vom Motortyp abhängig vorgegeben wird.

Die Drehzahl n kann in verschiedenen Weise bestimmt werden. Gemäß einer ersten Möglichkeit kann die Drehzahl n als Ableitung der Läuferlage φ' bestimmt werden. Dabei besteht allerdings ein Nachteil darin, dass bei der Berechnung eine Rückkopplung besteht da φ' = φ + K(φ, n). Dies kann unter Umständen zu einem Schwingen der Angabe der Drehzahl n führen.

Alternativ kann die Drehzahl n als Quotient

$$n = |U_{ind}| / |Km(\varphi' \text{ oder } \varphi)|$$

ermittelt werden, wobei Km der von dem Lagewinkel abhängigen Motorkonstanten entspricht.

Gemäß einer weiteren Verbesserung kann die Drehzahl n wie folgt ermittelt werden:

$$n = |U_{ind}| / |Km'|$$

wobei Km' einem gefilterten Km(φ' oder φ) entspricht. Auf Km(φ' oder φ) wird dazu der gleiche Filter angewendet; mit dem auch $U_{ind}$ durch seine Ermittlung beaufschlägt wird. Der Filter, den $U_{ind}$ erfährt, ergibt sich beispielsweise aus der Art der Messung (z.B. digitalen Abtastung) und Ermittlung von $U_{ind}$. Durch die Ableitung des Phasenstroms nach dt wird beispielsweise durch das endliche dt eine Tiefpassfilterung bewirkt.

Das Einlernen kann beispielsweise erfolgen, indem für bestimmte Rotorlagen φ' und Drehzahlen n die Phasenpotentiale im stromlosen Fall, d.h. bei nicht angelegten Phasenspannungen, ermittelt werden und somit ein Verlauf

der induzierten Spannung $\vec{U}_{ind}$ abhängig von der Rotorlage φ' und der Drehzahl n erfasst werden kann. Der Korrekturwinkel K(φ, n) ergibt sich aus der Differenz zwischen der Rotorlage φ'$_{mess}$ und dem Raumzeigerwinkel der ermittelten induzierten Spannung $\vec{U}_{ind\_mess}$ bei einer bestimmten Rotorlage φ'$_{mess}$ und einer bestimmten Drehzahl n$_{mess}$.

$$K\left(\varphi_{mess}, n_{mess}\right) = \varphi'_{mess} - arg\left(U_{ind\_mess} \cdot e^{-j\varphi_{mess}}\right)$$

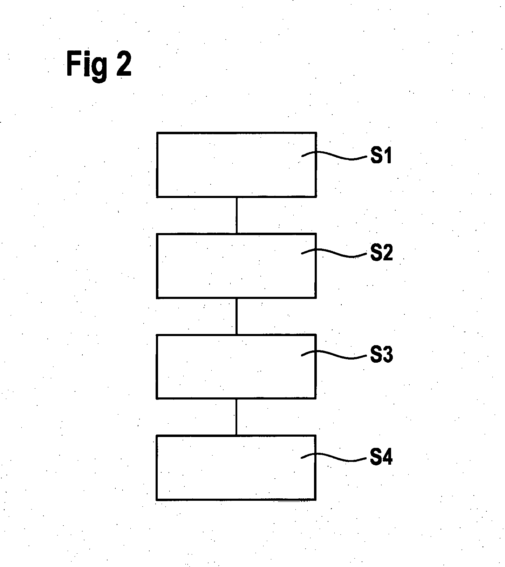

In Figur 2 ist ein Flussdiagramm zur Darstellung des Verfahrens zum Ermitteln der Rotorlage einer elektrischen Maschine 1 gezeigt. In Schritt S1 werden zunächst die induzierten Spannungen an den Phasenanschlüssen, über die die Phasenwicklungen 4 bestromt werden, ermittelt. Dazu werden die angelegten Phasenspannungen und die entsprechenden Phasenströme erfasst und die induzierten Spannungen nach obiger Formel ermittelt. Daraus wird die induzierte Spannung an dem entsprechenden Phasenanschluss ermittelt.

In Schritt S2 werden die so ermittelten induzierten Spannungen für jede Phase in ein statorfestes kartesisches Koordinatensystem umgerechnet und man erhält einen Betrag der induzierten Spannung und einen Raumzeigerwinkel für die momentane Rotorlage.

In Schritt S3 wird der Raumzeigerwinkel φ der induzierte Spannung $U_{ind} \cdot e^{-j\omega\varphi}$ mit dem entsprechenden Korrekturwinkel K(φ, n) beaufschlagt (addiert), der aus einer Lookup-Tabelle oder entsprechend einer vorbestimmten Funktion ermittelt wird.

Der korrigierte Raumzeigerwinkel φ'

$$\varphi' = \varphi + K(\varphi, n)$$

wird in Schritt S4 berechnet. Der korrigierte Raumzeigerwinkel φ' entspricht der Rotorlage bzw. die Rotorlage kann daraus mit einem einfachen Offset abgeleitet werden.

**Patentansprüche**

1. Verfahren zum Ermitteln einer Läuferlage einer rotatorischen, mehrphasigen, elektronisch kommutierten elektrischen Maschine (1), wobei die elektrische Maschine (1) mehrere Phasenwicklungen (4) aufweist, die über Phasenanschlüsse bestrombar sind, mit folgenden Schritten:

    - Bestimmen von Phasenspannungen und Phasenströmen an Phasenanschlüssen derelektrischen Maschine (1);
    - Ermitteln der induzierten Spannungen an den Phasenanschlüssen der elektrischen Maschine (1) aus den bestimmten Phasenspannungen und Phasenströmen;
    - Bereitstellen des durch die induzierten Spannungen bestimmten Spannungszeiger der induzierten Spannung bezüglich eines statorfesten kartesischen Koordinatensystems;
    - Bestimmen der Läuferlage als einen Raumzeigerwinkel des bezüglich des statorfesten kartesischen Koordinatensystems bereitgestellten Spannungszeigers der induzierten Spannung,
    wobei der Raumzeigerwinkel des umgewandelten Spannungszeigers der induzierten Spannung mit einem Korrekturwinkel beaufschlagt wird, wobei der Korrekturwinkel mithilfe des Spannungszeigerwinkels und mithilfe der Drehzahl des Läufers bestimmt wird.

2. Verfahren nach Anspruch 1, wobei das Bereitstellen des durch die induzierten Spannungen bestimmten Spannungszeigers der induzierten Spannung bezüglich des statorfesten kartesischen Koordinatensystems durchgeführt wird, indem die ermittelten induzierten Spannungen in das statorfeste kartesische Koordinatensystems umgewandelt werden, oder indem die bestimmten Phasenspannungen und Phasenströme an den Phasenanschlüssen der elektrischen Maschine (1) in das statorfeste kartesische Koordinatensystems umgewandelt werden, bevor aus diesen die induzierten Spannungen ermittelt werden.

**3.** Verfahren nach einem der vorangehenden Ansprüche, wobei der Korrekturwinkel mithilfe einer Lookup-Tabelle durch Vorgabe des Spannungszeigerwinkel und der Drehzahl bestimmt wird.

**4.** Verfahren nach einem der Ansprüche 1 bis 3, wobei das Bestimmen der Phasenspannungen und Phasenströme an den Phasenanschlüssen der elektrischen Maschine (1) durchgeführt wird, indem die Phasenspannungen und Phasenströme gemessen werden oder indem die Phasenspannungen aus einer bereitgestellten Zwischenkreisspannung und einem Tastverhältnis einer Pulsweitenmodulation, mit dem die Phasenanschlüsse angesteuert werden, ermittelt werden.

**5.** Vorrichtung zum Ermitteln einer Läuferlage einer rotatorischen, mehrphasigen, elektronisch kommutierten elektrischen Maschine (1), wobei die elektrische Maschine (1) mehrere Phasenwicklungen aufweist, die über Phasenanschlüsse bestrombar sind, umfassend:

- eine Einrichtung zum Bestimmen von Phasenspannungen und Phasenströmen an Phasenanschlüssen der elektrischen Maschine (1);
- eine Steuereinheit, die ausgebildet ist, um

• die induzierten Spannungen an den Phasenanschlüssen der elektrischen Maschine (1) zu ermitteln;
• um den durch die induzierten Spannungen bestimmten Spannungszeiger der induzierten Spannung bezüglich eines statorfesten kartesischen Koordinatensystem bereitzustellen; und
• um die Läuferlage als einen Spannungszeigerwinkel des bezüglich des statorfesten kartesischen Koordinatensystem bereitgestellten Spannungszeigers der induzierten Spannung zu bestimmen, wobei der Raumzeigerwinkel des umgewandelten Spannungszeigers der induzierten Spannung mit einem Korrekturwinkel beaufschlagt wird, wobei der Korrekturwinkel mithilfe des Spannungszeigerwinkels und mithilfe der Drehzahl des Läufers bestimmt wird.

**6.** Motorsystem mit einer rotatorischen, mehrphasigen, elektronisch kommutierten elektrischen Maschine (1) und mit der Vorrichtung nach Anspruch 5.

**7.** Computerprogrammprodukt, das einen Programmcode enthält, der, wenn er auf einer Datenverarbeitungseinheit ausgeführt wird, in dem Verfahren nach einem der Ansprüche 1 bis 4 die folgenden Schritte durchführt:

- Empfangen von Angaben zu den Phasenspannungen und Phasenströmen an Phasenanschlüssen der elektrischen Maschine (1);
- Ermitteln der induzierten Spannungen an den Phasenanschlüssen der elektrischen Maschine (1) aus den empfangenen Phasenspannungen und Phasenströmen;
- Bereitstellen der durch die induzierten Spannungen bestimmten Spannungszeiger der induzierten Spannung bezüglich eines statorfesten kartesischen Koordinatensystems; und
- Bestimmen der Läuferlage als einen Spannungszeigerwinkel des umgewandelten Spannungszeigers der induzierten Spannung, wobei der Raumzeigerwinkel des umgewandelten Spannungszeigers der induzierten Spannung mit einem Korrekturwinkel beaufschlagt wird, wobei der Korrekturwinkel mithilfe des Spannungszeigerwinkels und mithilfe der Drehzahl des Läufers bestimmt wird.

**Claims**

**1.** Method for ascertaining an armature position of a rotary, polyphase, electronically commutated electric machine (1), wherein the electric machine (1) has a plurality of phase windings (4), which can be energized via phase connections, said method comprising the following steps:

- determining phase voltages and phase currents at phase connections of the electric machine (1);
- ascertaining the induced voltages at the phase connections of the electric machine (1) from the determined phase voltages and phase currents;
- providing the voltage vector of the induced voltage with respect to a stator-fixed Cartesian coordinate system, said voltage vector being determined by the induced voltages;
- determining the armature position as a space vector angle of the voltage vector of the induced voltage, which voltage vector is provided with respect to the stator-fixed Cartesian coordinate system, wherein a correction angle is applied to the space vector angle of the converted voltage vector of the induced voltage, wherein the correction angle is determined with the aid of the voltage vector angle and with the aid of the rotation speed of the armature.

2. Method according to Claim 1, wherein the provision of the voltage vector of the induced voltage with respect to the stator-fixed Cartesian coordinate system, said voltage vector being determined by the induced voltages, is carried out by virtue of the ascertained induced voltages being converted into the stator-fixed Cartesian coordinate system or by virtue of the determined phase voltages and phase currents at the phase connections of the electric machine (1) being converted into the stator-fixed Cartesian coordinate system before the induced voltages are ascertained from said determined phase voltages and phase currents.

3. Method according to one of the preceding claims, wherein the correction angle is determined with the aid of a lookup table by inputting the voltage vector angle and the rotation speed.

4. Method according to one of Claims 1 to 3, wherein the determination of the phase voltages and phase currents at the phase connections of the electric machine (1) is carried out by virtue of the phase voltages and phase currents being measured or by virtue of the phase voltages being ascertained from a provided intermediate circuit voltage and a duty factor for a pulse width modulation with which the phase connections are driven.

5. Device for ascertaining an armature position of a rotary, polyphase, electronically commutated electric machine (1), wherein the electric machine (1) has a plurality of phase windings, which can be energized via phase connections, said device comprising:

- an apparatus for determining phase voltages and phase currents at phase connections of the electric machine (1);
- a control unit, which is designed

• to ascertain the induced voltages at the phase connections of the electric machine (1);
• to provide the voltage vector of the induced voltage with respect to a stator-fixed Cartesian coordinate system, said voltage vector being determined by the induced voltages; and
• to determine the armature position as a voltage vector angle of the voltage vector of the induced voltage, which voltage vector is provided with respect to the stator-fixed Cartesian coordinate system, wherein a correction angle is applied to the space vector angle of the converted voltage vector of the induced voltage, wherein the correction angle is determined with the aid of the voltage vector angle and with the aid of the rotation speed of the armature.

6. Motor system comprising a rotary, polyphase, electronically commutated electric machine (1) and comprising the device according to Claim 7.

7. Computer program product which contains a program code which, when run on a data processing unit, carries out the following steps in the method according to one of Claims 1 to 4:

- receiving indications of the phase voltages and phase currents at phase connections of the electric machine (1);
- ascertaining the induced voltages at the phase connections of the electric machine (1) from the received phase voltages and phase currents;
- providing the voltage vector of the induced voltage with respect to a stator-fixed Cartesian coordinate system, said voltage vector being determined by the induced voltages; and
- determining the armature position as a voltage vector angle of the converted voltage vector of the induced voltage, wherein a correction angle is applied to the space vector angle of the converted voltage vector of the induced voltage, wherein the correction angle is determined with the aid of the voltage vector angle and with the aid of the rotation speed of the armature.

**Revendications**

1. Procédé de détermination de la position de l'induit d'une machine électrique (1) rotative, polyphasée et à commutation électronique,
la machine électrique (1) présentant plusieurs enroulements de phase (4) qui peuvent être alimentés en courant par des bornes de phase,

le procédé comportant les étapes suivantes :

détermination des tensions de phase et des courants de phase sur les bornes de phase de la machine électrique (1),

obtention des tensions induites sur les bornes de phase de la machine électrique (1) à partir des tensions de phase et des courants de phase ainsi déterminés,

préparation du vecteur de tension induite déterminé à partir des tensions induites dans un système de coordonnées cartésiennes fixes par rapport au stator,

détermination de la position de l'induit sous la forme de l'angle spatial du vecteur de tension induite préparé par rapport au système de coordonnées cartésiennes fixes par rapport au stator,

un angle de correction étant appliqué sur l'angle spatial du vecteur de tension converti à partir de la tension induite, l'angle de correction étant déterminé à l'aide de l'angle du vecteur de tension et à l'aide de la vitesse de rotation de l'induit.

2. Procédé selon la revendication 1, dans lequel la préparation du vecteur de tension induite déterminé par les tensions induites dans un système de coordonnées cartésiennes fixes par rapport au stator est réalisée en convertissant les tensions induites obtenues dans le système de coordonnées cartésiennes fixes par rapport au stator ou en convertissant les tensions de phase et les courants de phase définis aux bornes de phase de la machine électrique (1) dans le système de coordonnées cartésiennes fixes par rapport au stator avant de déterminer les tensions induites à partir de là.

3. Procédé selon l'une des revendications précédentes, dans lequel l'angle de correction est déterminé à l'aide d'un tableau de consultation sur la base de données d'angle de vecteur de tension et de vitesse de rotation.

4. Procédé selon l'une des revendications 1 à 3, dans lequel la détermination des tensions de phase et des courants de phase sur les bornes de phase de la machine électrique (1) est réalisée en mesurant les tensions de phase et les courants de phase ou en obtenant les tensions de phase à partir d'une tension circulaire intermédiaire et d'un rapport d'échantillonnage d'une modulation de largeur d'impulsions par laquelle les bornes de phase sont commandées.

5. Dispositif de détermination de la position de l'induit d'une machine électrique (1) rotative, polyphasée et à commutation électronique,

la machine électrique (1) présentant plusieurs enroulements de phase qui peuvent être alimentés en courant par des bornes de phase,

le dispositif comprenant :

un ensemble de détermination des tensions de phase et des courants de phase sur les bornes de phase de la machine électrique (1),

une unité de commande configurée pour

obtenir les tensions induites sur les bornes de phase de la machine électrique (1),

préparer le vecteur de tension induite défini à partir des tensions induites dans un système de coordonnées cartésiennes fixes par rapport au stator et

déterminer la position de l'induit sous la forme d'un angle de vecteur de tension induite préparé dans le système de coordonnées cartésiennes fixes par rapport au stator,

un angle de correction étant appliqué sur l'angle spatial du vecteur de tension converti à partir de la tension induite, l'angle de correction étant déterminé à l'aide de l'angle du vecteur de tension et à l'aide de la vitesse de rotation de l'induit.

6. Système de moteur doté d'une machine électrique (1) rotative, polyphasée et à commutation électrique et un dispositif selon la revendication 5.

7. Produit de programme informatique qui contient un code de programme qui, lorsqu'il est exécuté sur une unité de traitement de données, exécute les étapes suivantes dans le procédé selon l'une des revendications 1 à 4 :

réception de données concernant les tensions de phase et les courants de phase sur les bornes de phase de la machine électrique (1),

détermination des tensions induites sur les bornes de phase de la machine électrique (1) à partir des tensions de phase et des courants de phase qui ont été reçus,

préparation du vecteur de tension induite défini à partir des tensions induites, dans un système de coordonnées cartésiennes fixes par rapport au stator et

détermination de la position de l'induit sous la forme d'un angle de vecteur de tension induite préparé dans le système de coordonnées cartésiennes fixes par rapport au stator,

un angle de correction étant appliqué sur l'angle spatial du vecteur de tension converti à partir de la tension induite, l'angle de correction étant déterminé à l'aide de l'angle du vecteur de tension et à l'aide de la vitesse de rotation de l'induit.

**Fig. 1a**

**Fig. 1b**

**Fig 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1612927 A1
- EP 1133050 A2